# FASCICULE DE BREVET EUROPEEN

(11) **EP 3 390 159 B1**
(45) Date de publication et mention de la délivrance du brevet: **01.01.2020**
(21) Numéro de dépôt: 16815882.2
(22) Date de dépôt: 24.11.2016
(51) Int. Cl.: B60R 13/02, B60R 13/04, B62D 25/02

(54) **AGENCEMENT DE GARNITURES D'HABILLAGE DANS LA ZONE D'ACCOSTAGE DE LA PARTIE INFÉRIEURE D'UN PIED-MILIEU**
ABGLEICHABDECKUNGSVORRICHTUNG IM UNTEREN ANLAGEBEREICH EINER MITTELSÄULENKONSTRUKTION
TRIM COVER MOUNTING SYSTEM IN THE LOWER ATTACHMENT REGION OF THE VEHICLE CENTER PILLAR

(30) Priorité: 16.12.2015 FR 1562445
(43) Date de publication de la demande: 24.10.2018
(73) Titulaire: PSA AUTOMOBILES S.A., 78300 Poissy (FR)
(72) Inventeur: RICHARD, Olivier, 68130 Wittersdorf (FR); DONNADIEU, Frederic, 25420 Bart (FR); BAILLON, Franck, 70400 Couthenans (FR)
(86) Numéro de dépôt international: PCT/FR2016/053075
(87) Numéro de publication internationale: WO 2017/103366

(56) Documents cités:
- EP-A1- 1 598 242
- JP-A- H 072 140
- JP-A- H11 310 083
- US-A1- 2015 210 219

## Description

### Domaine de l'invention

La présente invention concerne le domaine de l'habillage intérieur des véhicules automobiles et plus précisément la pose et la fixation des garnitures internes de véhicules. Elle vise en particulier le montage et l'agencement relatif des garnitures du pied milieu et des marches-pieds avant et arrière.

### Arrière-plan de l'invention

La caisse d'un véhicule automobile doté de deux rangées de sièges comprend classiquement sur chacun de ses côtés latéraux deux encadrements de porte avant et arrière.

Dans un véhicule de type utilitaire, chaque encadrement de porte avant est délimité par un pied avant, un pied milieu et par un marchepied avant, tandis que chaque encadrement de porte arrière est délimité par un pied arrière, un dit pied milieu et par un marchepied arrière.

Le document US2015210219 divulgue une carrosserie de véhicule comprenant un seuil latéral relié en superposant une pluralité de plaques et un agencement de garnitures d'habillage formant l'état de la technique plus proche de l'objet de la revendication 1. Dans une zone du seuil latéral positionnée dans une ouverture de porte, une garniture en gradins recouvre au moins une partie de cette zone. La garniture à gradins est formée d'un corps principal de garniture en résine dure et d'une partie terminale de garniture en résine souple. Le corps principal de la garniture couvre la surface supérieure du seuil latéral à travers une surface latérale qui comprend une partie de contact étanche. La partie d'extrémité de garniture est intégralement formée avec une extrémité du corps principal de garniture et recouvre au moins la partie de contact d'étanchéité. L'épaisseur de la partie d'extrémité de garniture diminue progressivement à partir d'une extrémité proximale formée d'un seul tenant avec le corps principal de garniture vers l'extrémité distale. Le document JP H11310083 divulgue un marchepied est en aluminium et deux couvercles en résine enveloppent le marchepied des deux côtés de manière à recouvrir la circonférence du marchepied 8 avec les deux couvercles en résine. L'apparence d'une marche latérale 1 est améliorée en faisant en sorte que les surfaces latérales avant et les surfaces latérales arrière se touchent l'une sur l'autre. Le document EP1598242 divulgue l'habillage d'un longeron latéral sur un véhicule automobile, qui, forme un espace creux avec une paroi extérieure du longeron et s'étend dans la direction longitudinale du véhicule entre une arche de roue avant et une arche de roue arrière et en dessous du nombre de baies de portière existantes jusqu'à un plancher du véhicule, des parties d'habillage supplémentaires étant intégrées dans l'habillage et disposées sur une surface d'accès du longeron formée respectivement dans la baie de portière concernée en fonction du nombre de baies de portière.

Les divers éléments du véhicule de type utilitaire, citées ci dessus, sont recouverts de garnitures d'habillage à la fois pour des raisons esthétiques évidentes mais également afin de limiter l'infiltration de bruits parasites dans l'habitacle du véhicule.

Les garnitures des marchepieds comportent traditionnellement une marche horizontale, une contremarche verticale, deux parois frontales avant et arrière s'élevant de façon sensiblement verticale à l'avant et à l'arrière de la marche, ainsi qu'une couverture périphérique horizontale bordant la contremarche et les deux parois frontales.

Elles sont mises en place de sorte que leurs couvertures périphériques reposent au moins partiellement sur le tapis ou la moquette recouvrant le plancher du véhicule.

Le montage de la garniture de pied milieu qui est réalisé ultérieurement pose alors certaines difficultés car son extrémité inférieure doit venir s'accoster à la fois sur les garnitures d'habillage de ces marchepieds mais également sur le tapis ou la moquette du plancher situé à un niveau légèrement inférieur.

Il est ainsi connu de prévoir, au niveau de cette extrémité inférieure du pied milieu, deux décrochements latéraux destinés à « absorber » cette différence de niveau entre les trois éléments sur lesquels repose ce pied milieu.

Toutefois, à l'usage, le rendu final est peu convaincant du fait des tolérances de fabrication des pièces et des jeux fonctionnels importants dues aux dispersions longitudinales lors du montage.

### Objet et résumé de l'invention

La présente invention vise donc à améliorer le rendu visuel au niveau de la zone d'accostage de l'extrémité inférieure de la garniture de pied milieu.

Elle propose à cet effet un agencement de garnitures d'habillage dans la zone d'accostage de la partie inférieure d'un pied milieu de véhicule automobile implanté entre deux ouvertures latérales dont les seuils comportent chacun un marchepied respectif, ledit pied milieu et lesdits marchepieds étant chacun habillés d'une garniture correspondante, chaque dite garniture de marchepied comportant une marche, une contremarche, deux parois frontales s'élevant à l'avant et à l'arrière de ladite marche, ainsi qu'une couverture périphérique horizontale bordant ladite contremarche et les deux dites parois frontales ;
caractérisé en ce que les deux dites couvertures périphériques sont reliées l'une à l'autre via des moyens de fixation et par deux de leurs extrémités longitudinales de sorte à s'étendre coplanairement dans la continuité l'une de l'autre, l'extrémité inférieure de ladite garniture de pied milieu reposant en intégralité sur le support plan horizontal formé par les deux dites couvertures périphériques au niveau de leur zone de jonction.

L'agencement selon l'invention assure ainsi un accostage particulièrement net et élégant de l'extrémité inférieure de la garniture de pied milieu, contribuant à améliorer sensiblement le niveau de qualité perçue par l'utilisateur sans nécessiter pour autant d'exigences particulières en termes de tolérances de fabrication et de précision de montage.

Selon des caractéristiques préférées de l'invention, prises seules ou en combinaison :
- lesdits moyens de fixation comportent au moins un organe élastiquement déformable solidaire de l'une desdites couvertures périphériques et coopérant par encliquetage avec un élément complémentaire solidaire de l'autre desdites couvertures périphériques ;
- lesdits moyens de fixation comportent un tenon relié au bord transversal de l'une desdites couvertures périphériques par un décrochement et s'étendant parallèlement et en retrait de cette couverture périphérique dans son prolongement, ledit tenon présentant au moins une fenêtre apte à coopérer avec un organe d'encliquetage élastiquement déformable s'étendant depuis la face inférieure de l'autre desdites couvertures périphériques ;
- lesdites couvertures périphériques sont chacune dotées sur l'ensemble de leur longueur d'un rebord longitudinal interne partiellement enfoncé dans une moquette ou un tapis recouvrant le plancher dudit véhicule, lesdits rebords longitudinaux s'étendant également coplanairement dans la continuité l'un de l'autre ;
- les bordures latérales externes des dites couvertures périphériques délimitent, au niveau de ladite zone de jonction, une échancrure bordant la partie inférieure dudit pied milieu ;
- ladite garniture de pied milieu comprend des moyens d'indexage longitudinal et vertical coopérant avec des moyens complémentaires prévus sur lesdites couvertures périphériques ;
- lesdits moyens d'indexage longitudinal comportent une patte s'étendant depuis ladite garniture de pied milieu et qui présente une encoche transversale coopérant avec un ergot correspondant saillant de l'une desdites couvertures périphériques ;
- lesdits moyens d'indexage vertical comportent une languette s'étendant depuis ladite garniture de pied milieu et qui traverse un arceau en U renversé saillant de l'une desdites couvertures périphériques, la face supérieure de ladite languette étant en outre accolée contre la face inférieure du sommet dudit arceau ; et/ou
- lesdits moyens d'indexage vertical comportent deux dites languettes coopérant avec deux dits arceaux saillant chacun d'une dite couverture périphérique respective.

L'invention vise également sous un second aspect un véhicule automobile comportant un tel agencement de garnitures d'habillage.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue en perspective prise de l'intérieur de l'habitacle de la zone d'implantation de la partie inférieure de la garniture d'habillage d'un pied milieu d'un véhicule de type utilitaire, au niveau de l'interface entre la garniture du marchepied avant et celle du marchepied arrière ;
- la figure 2 est une vue semblable à la figure 1, mais prise depuis l'extérieur de l'habitacle ;
- la figure 3 est une vue en perspective illustrant l'étape de montage de la garniture de marche pied avant sur la structure du véhicule ;
- la figure 4 est une vue en perspective de la zone de jonction entre les couvertures des garnitures des marchepieds avant et arrière avant le montage de la garniture d'habillage du pied milieu ;
- la figure 5 est une vue semblable à la figure 3 mais prise de dessous de manière à montrer les moyens d'encliquetage assurant la fixation entre les deux couvertures des garnitures de marchepieds (le châssis métallique du véhicule ayant été omis afin de faciliter la lecture) ; et
- la figure 6 est un agrandissement de la partie centrale de la figure 2 illustrant les moyens d'indexage de la partie inférieure de la garniture de pied milieu sur les couvertures des garnitures des marchepieds.

### Description détaillée d'un mode préféré de réalisation

On définit par rapport au véhicule un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal, et
- un axe Z, définissant une direction verticale, perpendiculaire au plan XY horizontal.

Le véhicule utilitaire dont les figures ne montrent qu'une petite partie, comporte un châssis avec une structure inférieure sur laquelle repose un plancher horizontal 1 recouvert d'une moquette ou d'un tapis 2.

Les figures ne montrent que la partie latérale du plancher 1 située à proximité de la zone d'implantation du pied milieu séparant les ouvertures latérales 3, 4 d'accès aux sièges avant et arrière, et ayant pour principale fonction d'assurer une reprise d'effort en cas de choc latéral ou de retournement subi par le véhicule.

Le côté du véhicule est bordé par un longeron métallique latéral 5 fixé à la structure du plancher 1 et dont seule une portion est visible sur les figures.

Un marchepied avant 6 et un marchepied arrière 7 sont ménagés dans ce longeron latéral 5 sur les seuils des ouvertures latérales d'accès aux sièges avant et arrière.

Ces deux marchepieds 6, 7 ainsi que le pied milieu (non représenté sur les figures afin de faciliter la lecture) sont habillés chacun d'une garniture respective 10, 30, 50 venue de moulage à partir d'un matériau thermoplastique.

Les deux garnitures de marchepied 10, 30, fixées rigidement au longeron latéral 5, comportent chacune une marche horizontale 11, 31 dont la face supérieure comprend une pluralité de nervures antidérapantes 12, 32, une contremarche verticale 13, 33, deux parois frontales avant 14, 34 et arrière 15 s'élevant de façon sensiblement verticale à l'avant et à l'arrière de la marche 11, 31, ainsi qu'une couverture périphérique plane horizontale 16, 36 bordant la contremarche 13, 33 et les deux parois frontales 14, 15, 34, 35.

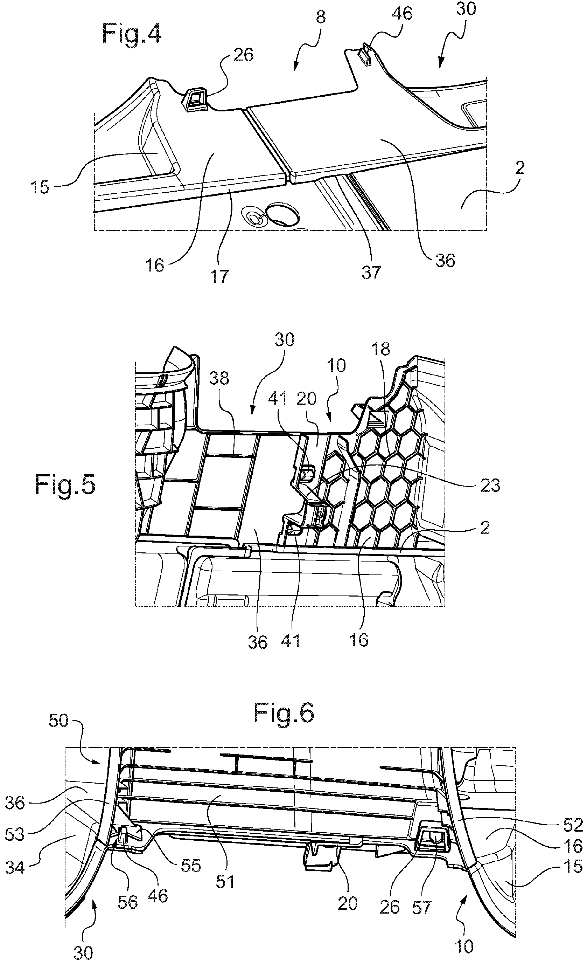

Cette couverture périphérique 16, 36 est dotée sur l'ensemble de sa longueur d'un rebord longitudinal interne 17, 37 replié vers la le plancher 1 de manière à s'enfoncer partiellement dans la moquette ou le tapis 2 après fixation de la garniture de marchepied 10, 30 sur le longeron 5. Sa face inférieure présente en outre une pluralité de nervures de rigidification 18, 38 comme illustré sur la figure 5.

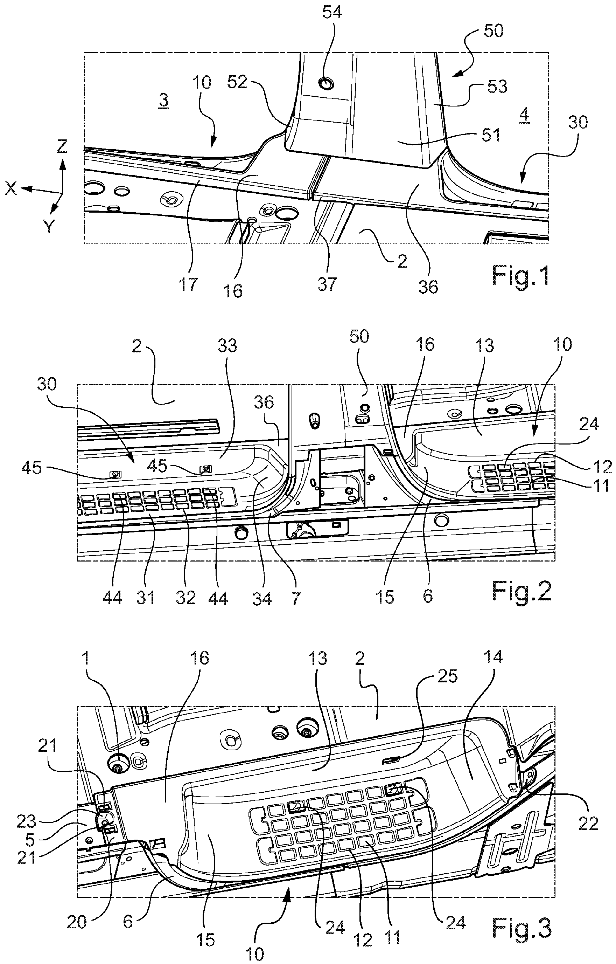

L'extrémité longitudinale avant de la couverture 36 de la garniture de marchepied arrière 30 est reliée par des moyens de fixation à l'extrémité longitudinale arrière de la couverture 16 de la garniture de marchepied avant 10 dans son prolongement, de sorte à assurer une continuité entre ces deux couvertures périphériques 16, 36 y compris entre leurs deux rebords longitudinaux internes 17, 37 (figures 1 et 4).

Les moyens de fixation comportent un tenon 20 relié au bord transversal arrière de la couverture périphérique 16 de la garniture de marchepied avant 10 par un décrochement et s'étendant parallèlement et en retrait de cette couverture périphérique 16 dans son prolongement arrière (figures 3 et 5).

Ce tenon 20 présente deux fenêtres rectangulaires 21 aptes à coopérer avec deux organes d'encliquetage élastiquement déformables 41 s'étendant depuis la face inférieure de la couverture périphérique 36 de la garniture de marchepied arrière 30 à proximité de son bord transversal avant (figure 3).

Le montage des deux garnitures de marchepieds 10, 30 s'effectue de la manière suivante.

La garniture de marchepied avant 10 est fixée en premier lieu sur le longeron latéral 5 par l'intermédiaire d'une pluralité de points de fixation par vissage 22, 23, 24, 25 situés à ses deux extrémités longitudinales ainsi qu'au niveau de la marche horizontale 11 et de la contremarche verticale 13, de sorte à assurer un maintien sans jeu de cette garniture selon les trois axes X, Y et Z.

Dans le détail et comme illustré par la figure 3, les points de fixation sont constitués par :
- une patte 22 s'étendant sensiblement verticalement depuis l'extrémité avant de la couverture périphérique 16 et dans laquelle est ménagé un perçage de passage d'axe sensiblement longitudinal pour une vis ;
- un fût de fixation tronconique 23 s'étendant verticalement en retrait depuis le tenon 20 et dans le fond duquel est ménagé un perçage de passage d'axe vertical pour une vis ;
- deux fûts de fixation tronconiques 24 s'étendant verticalement en retrait depuis la marche 11 et dans le fond de chacun desquels est ménagé un perçage de passage d'axe vertical pour une vis ; et
- un fût de fixation tronconique 25 s'étendant horizontalement en retrait depuis la contremarche 13 et dans le fond duquel est ménagé un perçage de passage d'axe horizontal pour une vis.

La garniture de marchepied arrière 30 est ensuite encliquetée sur la garniture de marchepied avant 10 (figure 5).

Pour ce faire, l'extrémité avant de la couverture périphérique 36 de la garniture de marchepied arrière 30 est préalablement disposée au dessus du tenon de montage 20 de la garniture de marchepied avant 10, de sorte que les deux organes d'encliquetage 41 soient à l'aplomb des deux fenêtres 21.

Après le clipsage, les deux couvertures périphériques 16, 36 s'étendent coplanairement dans la continuité l'une de l'autre et il en est de même pour leurs rebords longitudinaux internes 17, 37 (figures 1 et 4).

Les organes d'encliquetage 41 assurent un maintien ferme de la face inférieure de l'extrémité avant de la couverture périphérique 36 de la garniture de marchepied arrière 30 contre le tenon de montage 20 de la garniture de marchepied avant 10, de sorte à empêcher tout jeu vertical (selon Z) entre ces deux garnitures.

On notera en outre que les dimensions longitudinales des fenêtres 21 sont prévues légèrement supérieures à celles des organes d'encliquetage 41 de sorte à pouvoir absorber les tolérances de fabrication selon l'axe longitudinal principal des deux garnitures de marchepieds 10, 30.

La garniture de marchepied arrière 30 est ensuite fixée sur le longeron latéral 5 par l'intermédiaire d'une pluralité de points de fixation par vissage 44, 45 situés à son extrémité arrière ainsi qu'au niveau de la marche horizontale et de la contremarche verticale (ces derniers étant semblables à ceux décrits précédemment pour la garniture de marchepied avant), de sorte à assurer également un maintien sans jeu de cette garniture selon les trois axes X, Y et Z.

Comme on peut le voir sur la figure 4, les bordures latérales externes des deux couvertures 16, 36 délimitent, au niveau de la zone de jonction entre les deux garnitures de marchepied 10, 30, une échancrure 8 bordant la partie inférieure du pied milieu non visible sur les figures.

La garniture de pied milieu 50, représentée sur les figures 1, 2 et 6, s'étend verticalement en s'évasant progressivement vers le bas.

Elle présente une section transversale en U et comporte une paroi principale longitudinale 51 formant la base de ce U ainsi que deux retours transversaux avant 52 et arrière 53 constituant les deux branches de ce même U.

Cette garniture de pied milieu 50 est fixée rigidement au pied milieu par l'intermédiaire de plusieurs points de fixation par vissage tel sue 54 répartis verticalement le long de sa paroi principale longitudinale 51.

Son extrémité inférieure s'étend selon un plan horizontal et repose en intégralité sur le support plan horizontal formé par les deux couvertures 16, 36 des garnitures de marchepied 10, 30 au niveau de leur zone de jonction.

Plus précisément, le bord inférieur du retour transversal avant 52 et une partie du bord inférieur de la paroi principale longitudinale 51 reposent sur la couverture 16 de la garniture de marchepied avant 10, tandis que le bord inférieur du retour transversal arrière 53 et l'autre partie du bord inférieur de cette paroi principale longitudinale 51 reposent sur la couverture 36 de la garniture de marchepied arrière 30 (figures 1 et 6).

Afin de préserver un accostage parfait sans jeu longitudinal (selon X) ou vertical (selon Z), la garniture de pied milieu 50 comprend du côté interne (non visible depuis l'intérieur du véhicule) des moyens d'indexage longitudinal et vertical coopérant avec des moyens complémentaires prévus sur les couvertures 16, 36 des garnitures de marchepied avant 10 et arrière 30.

Les moyens d'indexage longitudinal sont ici constitués par une patte 55 saillant vers l'avant depuis l'extrémité inférieure du retour latéral arrière de la garniture de pied milieu et qui présente une encoche transversale 56 coopérant avec un ergot correspondant 46 saillant de la couverture 36 de la garniture de marchepied arrière 30 à proximité de sa paroi frontale avant 34, de sorte à empêcher tout déplacement longitudinal de cette garniture de pied milieu 50 (figure 6).

Les moyens d'indexage vertical sont constitués en l'espèce par une languette 57 saillant transversalement du côté interne de la paroi principale 51 de la garniture de pied milieu 50, à proximité de son extrémité inférieure et du retour latéral avant 52, et qui traverse un arceau en U renversé 26 saillant verticalement depuis la couverture 16 de la garniture de marchepied avant 10 à proximité de sa paroi frontale arrière 15, la face supérieure de cette languette 57 étant en outre accolé contre la face inférieure du sommet de cet arceau 26 de sorte à empêcher tout soulèvement de cette garniture de pied milieu 50.

Selon des variantes de réalisation non représentées, les moyens de fixation entre l'extrémité avant de la garniture de marchepied arrière et l'extrémité arrière de la garniture de marchepied avant sont différents.

Selon d'autres variantes de réalisation non représentées, les moyens d'indexation de la garniture de pied milieu diffèrent également.

En particulier, afin d'éviter tout pivotement de cette garniture autour d'un axe transversal susceptible d'entrainer un léger soulèvement de sa partie arrière, un second organe d'indexation similaire à la languette 57 peut être disposé à proximité du retour latéral arrière 53, ce dernier coopérant avec un second arceau tel que 26 s'étendant verticalement depuis la couverture 36 de la garniture de marchepied arrière 30 à proximité de sa paroi frontale avant 34.

D'une manière générale, on rappelle que la présente invention ne se limite pas aux formes de réalisation décrites et représentées, mais qu'elle englobe toute variante d'exécution à la portée de l'homme du métier.

## Revendications

1. Agencement de garnitures d'habillage dans la zone d'accostage de la partie inférieure d'un pied milieu de véhicule automobile implanté entre deux ouvertures latérales (3, 4) dont les seuils comportent chacun un marchepied respectif, ledit pied milieu et lesdits marchepieds étant chacun habillés d'une garniture correspondante (10, 30, 50), chaque dite garniture de marchepied (10, 30) comportant une marche (11, 31), une contremarche (13, 33), deux parois frontales (14, 15, 34, 35) s'élevant à l'avant et à l'arrière de ladite marche (11, 31) ainsi qu'une couverture périphérique horizontale (16, 36) bordant ladite contremarche (13, 33) et les deux dites parois frontales (14, 15, 34, 35) ;
**caractérisé en ce que** les deux dites couvertures périphériques (16, 36) sont reliées l'une à l'autre via des moyens de fixation (20, 21, 41) et par deux de leurs extrémités longitudinales de sorte à s'étendre coplanairement dans la continuité l'une de l'autre, l'extrémité inférieure de ladite garniture de pied milieu (50) reposant en intégralité sur le support plan horizontal formé par les deux dites couvertures périphériques (16, 36) au niveau de leur zone de jonction.

2. Agencement selon la revendication 1, **caractérisé en ce que** lesdits moyens de fixation comportent au moins un organe élastiquement déformable (41) solidaire de l'une (36) desdites couvertures périphériques (16, 36) et coopérant par encliquetage avec un élément complémentaire (21) solidaire de l'autre (16) desdites couvertures périphériques (16, 36).

3. Agencement selon la revendication 2, **caractérisé en ce que** lesdits moyens de fixation comportent un tenon (20) relié au bord transversal de l'une (16) desdites couvertures périphériques (16, 36) par un décrochement et s'étendant parallèlement et en retrait de cette couverture périphérique (16) dans son prolongement, ledit tenon (20) présentant au moins une fenêtre (21) apte à coopérer avec un organe d'encliquetage élastiquement déformable (41) s'étendant depuis la face inférieure de l'autre (36) desdites couvertures périphériques (16, 36).

4. Agencement selon l'une des revendications 1 à 3, **caractérisé en ce que** lesdites couvertures périphériques (16, 36) sont chacune dotées sur l'ensemble de leur longueur d'un rebord longitudinal interne (17, 37) partiellement enfoncé dans une moquette ou un tapis (2) recouvrant le plancher (1) dudit véhicule, lesdits rebords longitudinaux (17, 37) s'étendant également coplanairement dans la continuité l'un de l'autre.

5. Agencement selon l'une des revendications 1 à 4, **caractérisé en ce que** les bordures latérales externes des dites couvertures périphériques (16, 36) délimitent, au niveau de ladite zone de jonction, une échancrure (8) bordant la partie inférieure dudit pied milieu.

6. Agencement selon l'une des revendications 1 à 5, **caractérisé en ce que** ladite garniture de pied milieu (50) comprend des moyens d'indexage longitudinal (55, 56) et vertical (57) coopérant avec des moyens complémentaires (26, 46) prévus sur lesdites couvertures périphériques (16, 36).

7. Agencement selon la revendication 6, **caractérisé en ce que** lesdits moyens d'indexage longitudinal comportent une patte (55) s'étendant depuis ladite garniture de pied milieu (50) et qui présente une encoche transversale (56) coopérant avec un ergot correspondant (46) saillant de l'une (36) desdites couvertures périphériques (16, 36).

8. Agencement selon l'une des revendications 6 ou 7, **caractérisé en ce que** lesdits moyens d'indexage vertical comportent une languette (57) s'étendant depuis ladite garniture de pied milieu (50) et qui traverse un arceau en U renversé (26) saillant de l'une (16) desdites couvertures périphériques (16, 36), la face supérieure de ladite languette (57) étant en outre accolée contre la face inférieure du sommet dudit arceau (26).

9. Agencement selon la revendication 8, **caractérisé en ce que** lesdits moyens d'indexage vertical comportent deux dites languettes (57) coopérant avec deux dits arceaux (26) saillant chacun d'une dite couverture périphérique respective (16, 36).

10. Véhicule automobile comportant un agencement de garnitures d'habillage selon l'une des revendications 1 à 9.

## Patentansprüche

1. Vorrichtung aus Abgleichabdeckungen in dem unteren Anlagebereich einer Kraftfahrzeugmittelsäule, die zwischen zwei seitlichen Öffnungen (3, 4) implantiert ist, deren Schwellen jeweils ein Trittbrett umfassen, wobei die Mittelsäule und die Trittbretter jeweils mit einer entsprechenden Abgleichabdeckung (10, 30, 50) überzogen sind, wobei jede Trittbrettabgleichabdeckung (10, 30) eine Stufe (11, 31), ein Stoßbrett (13, 33), zwei Frontwände (14, 15, 34, 35), die sich an der Vorderseite und der Rückseite der Stufe (11, 31) erheben, sowie eine horizontale umfängliche Decke (16, 36), die das Stoßbrett (13, 33) und die zwei Frontwände (14, 15, 34, 35) einfassen, umfasst;
**dadurch gekennzeichnet, dass** die zwei umfänglichen Decken (16, 36) miteinander über Befestigungsmittel (20, 21, 41) verbunden sind, und durch zwei ihrer Längsenden, so dass sie sich koplanar eine nach der anderen erstrecken, wobei das untere Ende der Mittelsäulenabgleichabdeckung (50) integral auf dem horizontalen ebenen Träger ruht, der von den zwei umfänglichen Decken (16, 36) in dem Bereich ihrer Stoßzone gebildet wird.

2. Vorrichtung nach Anspruch 1, **dadurch gekennzeichnet, dass** die Befestigungsmittel mindestens ein elastisch verformbares Organ (41) umfassen, das fest mit einer (36) der umfänglichen Decken (16, 36) verbunden ist und durch Einrasten in ein komplementäres Element (21), das fest mit der anderen (16) der umfänglichen Decken (16, 36) verbunden ist, zusammenwirkt.

3. Vorrichtung nach Anspruch 2, **dadurch gekennzeichnet, dass** die Befestigungsmittel einen Zapfen (20) umfassen, der mit dem Querrand der einen (16) der umfänglichen Decken (16, 36) durch einen Rücksprung verbunden ist und sich parallel und im Rücksprung zu dieser umfänglichen Decke (16) in ihrer Verlängerung erstreckt, wobei der Zapfen (20) mindestens ein Fenster (21) aufweist, das geeignet ist, um mit einem elastisch verformbaren Einrastorgan (41) zusammenzuwirken, das sich von der unteren Fläche der anderen (36) der umfänglichen Decken (16, 36) erstreckt.

4. Vorrichtung nach einem der Ansprüche 1 bis 3, **dadurch gekennzeichnet, dass** die umfänglichen Decken (16, 36) jeweils auf ihrer gesamten Länge mit einer inneren Längsleiste (17, 37) versehen sind, die teilweise in einen Läufer oder einen Teppich (2), der den Fußboden (1) des Fahrzeugs abdeckt, eingedrückt ist, wobei sich die Längsleisten (17, 37) ebenfalls koplanar eine nach der anderen erstrecken.

5. Vorrichtung nach einem der Ansprüche 1 bis 4, **dadurch gekennzeichnet, dass** die äußeren Seitenränder der umfänglichen Decken (16, 36) in dem Bereich der Stoßzone einen Ausschnitt (8) abgrenzen, der den unteren Teil der Mittelsäule umrandet.

6. Vorrichtung nach einem der Ansprüche 1 bis 5, **dadurch gekennzeichnet, dass** der Mittelsäulenbeschlag (50) Längs- (55, 56) und Vertikalpositionierungsmittel (57) umfasst, die mit komplementären Mitteln (26, 46) zusammenwirken, die auf den umfänglichen Decken (16, 36) vorgesehen sind.

7. Vorrichtung nach Anspruch 6, **dadurch gekennzeichnet, dass** die Längspositionierungsmittel eine Pratze (55) umfassen, die sich ausgehend von dem Mittelsäulenbeschlag (50) erstreckt und eine Querkerbe (56) aufweist, die mit einem entsprechenden Dorn (46), der von einer (36) der umfänglichen Decken (16, 36) vorragt, zusammenwirkt.

8. Vorrichtung nach einem der Ansprüche 6 oder 7, **dadurch gekennzeichnet, dass** die Vertikalpositionierungsmittel eine Zunge (57) umfassen, die sich ausgehend von dem Mittelsäulenbeschlag (50) erstreckt und einen Bogen in umgekehrtem U (26) durchquert, der von einer (16) der umfänglichen Decken (16, 36) vorragt, wobei die obere Fläche der Zunge (57) außerdem gegen die untere Fläche des Scheitels des Bogens (26) angefügt ist.

9. Vorrichtung nach Anspruch 8, **dadurch gekennzeichnet, dass** die Vertikalpositionierungsmittel zwei Zungen (57) umfassen, die mit den zwei Bögen (26), die jeweils von einer der jeweiligen umfänglichen Decken (16, 36) vorragen, zusammenwirken.

10. Kraftfahrzeug, das eine Vorrichtung aus Abgleichabdeckungen nach einem der Ansprüche 1 bis 9 umfasst.

## Claims

1. A trim cover mounting system in the attachment region of the lower part of a motor vehicle centre pillar, installed between two lateral openings (3, 4), the sills of which each comprise a respective step plate, the said centre pillar and said step plates each being covered with a corresponding trim (10, 30, 50), each said step plate trim (10, 30) comprising a step (11, 31), a riser (13, 33), two front walls (14, 15, 34, 35) rising at the front and at the rear of said step (11, 31), and a horizontal peripheral cover (16, 36) bordering said riser (13, 33) and the two said front walls (14, 15, 34, 35);
**characterized in that** the two said peripheral covers (16, 36) are connected to one another via fastening means (20, 21, 41) and by two of their longitudinal ends so as to extend in a coplanar manner in continuity one from the other, the lower end of said centre pillar trim (50) resting entirely on the horizontal flat support formed by the two said peripheral covers (16, 36) at the level of their junction zone.

2. The system according to Claim 1, **characterized in that** said fastening means comprise at least one elastically deformable member (41) integral with one (36) of said peripheral covers (16, 36) and cooperating by detenting with a complementary element (21) integral with the other (16) of said peripheral covers (16, 36) .

3. The system according to Claim 2, **characterized in that** said fastening means comprise a tenon (20) connected to the transverse edge of one (16) of said peripheral covers (16, 36) by a recess and extending parallel and set back from this peripheral cover (16) in its extent, said tenon (20) having at least one window (21) able to cooperate with an elastically deformable detenting member (41) extending from the lower face of the other (36) of said peripheral covers (16, 36).

4. The system according to one of Claims 1 to 3, **characterized in that** said peripheral covers (16, 36) are each equipped over the whole of their length with an internal longitudinal edge (17, 37) partially inserted in a carpet or a mat (2) covering the floor (1) of said vehicle, said longitudinal edges (17, 37) also extending in a coplanar manner in continuity one from the other.

5. The system according to one of Claims 1 to 4, **characterized in that** the external lateral edges of said peripheral covers (16, 36) delimit, at the level of said junction zone, an indentation (8) bordering the lower part of said centre pillar.

6. The system according to one of Claims 1 to 5, **characterized in that** said centre pillar trim (50) includes longitudinal (55, 56) and vertical (57) indexing means cooperating with complementary means (26, 46) provided on said peripheral covers (16, 36).

7. The system according to Claim 6, **characterized in that** said longitudinal indexing means comprise a lug (55) extending from said centre pillar trim (50) and which has a transverse notch (56) cooperating with a corresponding pin (46) projecting from one (36) of said peripheral covers (16, 36).

8. The system according to one of Claims 6 or 7, **characterized in that** said vertical indexing means comprise a tongue (57) extending from said centre pillar trim (50) and which passes through an inverted U-shaped arch (26) projecting from one (16) of said peripheral covers (16, 36), the upper face of said tongue (57) being, furthermore, placed against the lower face of the apex of said arch (26).

9. The system according to Claim 8, **characterized in that** said vertical indexing means comprise two said tongues (57) cooperating with two said arches (26) each projecting from one respective said peripheral cover (16, 36).

10. A motor vehicle comprising a system of trim covers according to one of Claims 1 to 9.
